# FASCICULE DE BREVET EUROPEEN

(11) **EP 3 437 294 B1**
(45) Date de publication et mention de la délivrance du brevet: **04.12.2019**
(21) Numéro de dépôt: 17717211.1
(22) Date de dépôt: 20.03.2017
(51) Int. Cl.: H04L 29/06, H04L 29/08, H04W 12/08, H04W 12/10, G08C 17/02

(54) **SYSTEME DE COMMANDE D'UN VEHICULE A DISTANCE**
FERNSTEUERUNGSSYSTEM FÜR EIN FAHRZEUG
REMOTE VEHICLE CONTROL SYSTEM

(30) Priorité: 31.03.2016 FR 1652789
(43) Date de publication de la demande: 06.02.2019
(73) Titulaire: PSA Automobiles SA, 78300 Poissy (FR)
(72) Inventeur: ANGELI, Johann, 78570 Andresy (FR)
(74) Mandataire: Jeannin, Laurent Jean-Pierre
(86) Numéro de dépôt international: PCT/FR2017/050648
(87) Numéro de publication internationale: WO 2017/168073

(56) Documents cités:
- FR-A1- 3 022 664
- US-A1- 2014 282 470
- US-A1- 2015 281 374

## Description

L'invention concerne la commande à distance de véhicule automobile et plus précisément la sécurisation de ces commandes.

On connait, par le document US2015/0281374, un système de communication à distance avec un véhicule. Ce système comporte un courtier de messages comportant des rubriques. Le système permet l'échange de messages entre un véhicule et un calculateur distant par l'intermédiaire du courtier de messages. Le système permet, en particulier, au calculateur distant de commander la réalisation d'une action au véhicule (par exemple, le verrouillage du véhicule) en publiant un message dans une rubrique du courtier.

Les documents US2014/0282470 et FR3022664 décrivent également des systèmes de communication à distance avec un véhicule. Le document US2014/0282470 divulgue en outre un courtier de messages contenant des rubriques.

Un des inconvénients d'un tel système, est qu'il augmente le risque de piratage informatique des véhicules. En effet, un problème se pose lorsqu'une personne mal intentionnée parvient, de façon frauduleuse, à publier des messages dans des rubriques du courtier. La personne mal intentionnée peut alors prendre le contrôle du véhicule à distance. Il existe donc un besoin d'améliorer la sécurité d'un tel système.

L'invention a pour but la sécurisation des commandes à distance des véhicules et est définie par les revendications en annexe.

Elle propose plus précisément à cet effet un système de commande d'un véhicule à distance à partir d'un terminal, comportant un courtier de message comprenant :
- une première rubrique pour recevoir au moins un premier message publié par le terminal, ledit premier message comportant une commande,
- une deuxième rubrique pour recevoir au moins un deuxième message destiné au véhicule,
ledit système étant caractérisé en ce qu'il comporte en outre un actionneur apte à recevoir le premier message et apte à effectuer une vérification sur le premier message et, si la vérification du premier message est positive, à publier un deuxième message, dans la deuxième rubrique de façon à transmettre la commande au véhicule, le deuxième message (M2) comportant ladite commande.

L'invention intègre pour l'utilisation de ces commandes à distance, un intervenant supplémentaire (l'actionneur) dans les échanges entre des terminaux et le véhicule.

L'intervenant supplémentaire cloisonnera les communications en empêchant les échanges directs entre ces terminaux distants (i.e. non physiquement reliés au véhicule) et le véhicule.

Cet intervenant sera en charge de la validation des commandes soumises et ne les soumettra au véhicule que si celles-ci sont valides et légitimes.

Le système de commande selon l'invention comporte un élément dédié (l'actionneur) à la sécurisation du système. Tous les messages publiés dans une rubrique du courtier et destinés à un véhicule, sont analysés par l'actionneur de façon à vérifier leur authenticité. Les messages publiés ne sont pas directement consommables par le véhicule.

Selon l'invention, seul l'actionneur est en mesure de transférer les messages dans une rubrique pour laquelle le véhicule est abonné.

Avantageusement, le premier message comporte un jeton d'autorisation comprenant des autorisations, et l'actionneur comporte des moyens de vérification apte à vérifier que la commande contenu dans le premier message est conforme aux autorisations du jeton.

Cette caractéristique permet d'améliorer la sécurité en vérifiant si la commande contenue dans le premier message est cohérente avec les autorisations du jeton.

Avantageusement, les jetons sont chiffrés et signés et l'actionneur comporte des moyens de déchiffrement et vérification de la signature d'un jeton.

Cette caractéristique permet d'améliorer la sécurité en chiffrant (assure la confidentialité) et en signant (assure que le jeton est délivré par une autorité de confiance et qu'il n'a pas été altéré.

Avantageusement, seul le terminal est autorisé à publier des messages dans la première rubrique.

Cette caractéristique permet aussi d'améliorer la sécurité du système. Comme seul un terminal peut publier dans une rubrique donnée, cela évite à l'actionneur d'avoir à gérer un afflux de messages non autorisée. Elle permet une protection contre une attaque consistant à envoyer massivement des messages, depuis un terminal non légitime, pour saturer le système.

Avantageusement, seul le véhicule est autorisé à recevoir les messages publiés dans la deuxième rubrique.

Cette caractéristique permet d'améliorer la confidentialité du système, car seul le véhicule peut lire les messages.

Avantageusement, le courtier de messages comporte, en outre, une troisième rubrique pour recevoir au moins un troisième message publié par le véhicule et l'actionneur reçoit le troisième message publié dans la troisième rubrique.

Cette caractéristique permet d'améliorer sécurité et fiabilité. Elle permet à l'actionneur de recevoir des messages de la part du véhicule pour acquitter ou refuser les commandes demandées.

Avantageusement, le courtier de message est configuré pour que le terminal reçoive aussi le troisième message.

Cette caractéristique permet au terminal (et donc à l'utilisateur) de savoir si une commande a bien été réalisée.

Avantageusement, le système de commande d'un véhicule selon l'invention, comporte en outre un dispositif de stockage et le courtier de message est configuré pour que le dispositif de stockage reçoive le troisième message.

Cette caractéristique permet au dispositif de stockage de savoir si une commande a bien été réalisée et de récupérer des données émises par le véhicule.

Avantageusement, l'actionneur est en outre configuré pour :
- Déterminer une série de conditions à partir du premier message,
- Vérifier la série de conditions déterminées,
- Publier le deuxième message dans la deuxième rubrique uniquement si les conditions sont vérifiées.

Cette caractéristique permet à l'actionneur de filtrer certains messages et de ne pas encombrer le véhicule avec des messages indésirables.

D'autres caractéristiques et avantages de l'invention apparaîtront à l'examen de la description détaillée ci-après, et des dessins annexés, sur lesquels:
- la figure 1 illustre un système de commande à distance d'un véhicule selon l'invention ;
- la figure 2 illustre un exemple de véhicule apte à être commandé par un système selon l'invention.

Les dessins annexés pourront non seulement servir à compléter l'invention, mais aussi contribuer à sa définition, le cas échéant.

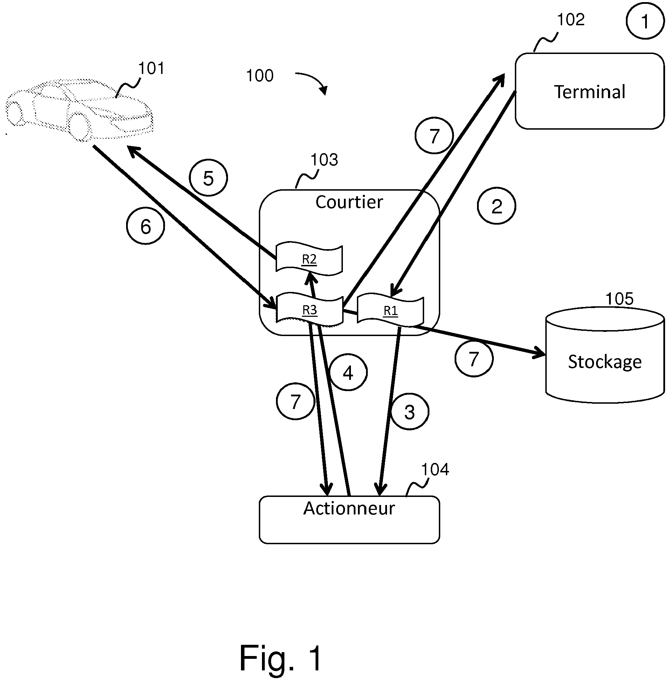

La figure 1 montre un système 100 de commande à distance d'un véhicule 101 à distance à partir d'un terminal 102. Le système 100 comporte un courtier 103 de message et un actionneur 104 apte à échanger des messages avec le courtier 103.

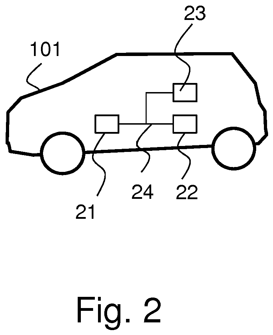

En référence à la figure 2, le véhicule 101 comporte un premier calculateur 21. Le premier calculateur 21 est apte à échanger des données à distance avec le courtier 103 par exemple par l'intermédiaire d'un réseau sans fil (ex : 3G, 4G, Wi-Fi).

Le véhicule 101 comporte par exemple un deuxième calculateur 22 dédié par exemple à la gestion du moteur du véhicule 101. Le véhicule 101 comporte par exemple un troisième calculateur 23 dédié par exemple à la gestion de l'habitacle du véhicule 101. Le troisième calculateur 23 gère un certain nombre d'équipements électriques du véhicule 101 et notamment, des airbags, des éclairages intérieurs, le verrouillage/déverrouillage des portes et du coffre, le fonctionnement des vitres et de toit ouvrant électriques, le cadencement des essuie-glaces.

Chacun des calculateurs 21, 22, 23 comporte au moins un processeur et une mémoire.

Le véhicule 101 comporte au moins un bus de données 24 sur lequel transitent des données échangées par les différents calculateurs 21, 22, 23 embarqués dans le véhicule 101. Le bus de données 24 est par exemple un bus de type CAN (pour Controller Area Network) c'est-à-dire un système multiplexé sur lequel une pluralité de calculateurs communiquent à tour de rôle en échangeant des trames de communications.

Un terminal 102 est un dispositif, comportant au moins un processeur et au moins une mémoire, capable d'exécuter une application logicielle. L'application logicielle est capable de générer ou d'initier des messages à destination du courtier 103.

Le terminal 102 est, par exemple, un ordinateur connecté au réseau Internet sur lequel est exécuté une application WEB distante au travers d'un navigateur WEB local. Cette application distante est capable d'envoyer des messages au courtier 103.

Mais le terminal 102 peut aussi être un téléphone mobile exécutant une application mobile apte à envoyer directement des messages au courtier 103.

Le courtier 103 de messages (ou message broker selon l'expression anglo-saxonne) fournit un mécanisme de publication/abonnement (publish/subscribe). Le mécanisme de publication/abonnement manipule un concept de rubrique (topic) au travers duquel au moins un éditeur (publisher) envoie des messages et au moins un abonné (subscriber) reçoit des messages.

Les abonnés s'abonnent à une ou plusieurs rubriques. Les abonnés ne reçoivent que les messages publiés dans les rubriques auxquels ils sont abonnés.

Un courtier 103 selon l'invention comporte au moins une première rubrique R1 et une seconde rubrique R2.

La première rubrique R1 permet de recevoir des messages M1 d'un terminal 102. Autrement dit, au moins un terminal 102 est éditeur dans la rubrique R1. La rubrique R1 est dédiée à un terminal 102 donné et contient les éléments permettant à l'actionneur 104 de l'identifier.

Les messages M1 publiés dans la première rubrique R1 sont reçus par l'actionneur 104. Autrement dit, l'actionneur est abonné à la première rubrique R1.

De façon avantageuse, seul un terminal 102 est autorisé à publier des messages dans la première rubrique R1. Plusieurs terminaux 102 peuvent publier des messages dans des rubriques R1. Dans ce cas de figure, pour chaque rubrique R1 correspondra un et un seul terminal 102. Et l'actionneur 104 s'abonnera à toutes les rubriques R1.

La seconde rubrique R2 permet au véhicule 101 de recevoir des messages M2 provenant de l'actionneur 104. Autrement dit, l'actionneur 104 est éditeur dans la deuxième rubrique R2 et le véhicule 101 est abonné à la rubrique R2. La rubrique R2 est dédiée à un véhicule 101 donné et contient les éléments permettant à l'actionneur 104 de l'identifier.

Cette caractéristique permet d'améliorer la sécurité du système. En limitant les terminaux autorisés à publier sur une rubrique, on peut prévenir des tentatives malveillantes consistant à envoyer un grand nombre de messages au courtier 103 de façon à le saturer et à le rendre indisponible.

En découpant les échanges, entre le terminal 102 et le véhicule 101, en 2 rubriques distinctes, on peut prévenir des tentatives malveillantes consistant à utiliser des fonctions à distances sur un véhicule 101 sans en avoir l'autorisation. Autrement dit, la vérification des autorisations est réalisée par l'actionneur 104 et non par le véhicule 101.

De façon avantageuse, seul le véhicule 101 est autorisé à recevoir les messages publiés dans la deuxième rubrique R2. Autrement dit, seul le véhicule 101 est abonné à la rubrique R2.

Cette caractéristique permet d'améliorer la confidentialité du système car seul le véhicule 101 reçoit les messages publiés dans la deuxième rubrique R2.

Afin de faciliter la publication et l'abonnement aux rubriques, les rubriques peuvent être organisées de façon hiérarchisée sous la forme d'un arbre.

De façon avantageuse, le courtier de messages 103 comporte une rubrique R2 dédiée au véhicule. Cette rubrique est par exemple nommée en utilisant un identifiant propre au véhicule 101, par exemple son VIN (acronyme de l'expression anglo-saxonne Vehicule Identification Number). Cette rubrique peut comprendre une pluralité de sous rubriques.

Dans un mode de réalisation, la deuxième rubrique R2 comporte au moins autant de sous rubriques (organisée hiérarchiquement ou non) que de fonctions du véhicule pouvant être actionnées à distance. Autrement dit, chaque fonction du véhicule est associée à une rubrique qui lui est dédiée. Dans ce mode de réalisation, la publication d'un message dans la rubrique d'une fonction indique au véhicule de déclencher la fonction. On comprend que dans ce mode de réalisation le deuxième message M2 publié dans la rubrique ne nécessite pas de contenir la commande.

La commande indiquée dans le premier message est utilisée par l'actionneur 104 pour déterminer dans quelle rubrique publier le deuxième message M2.

Par exemple, la rubrique R2 comporte une sous rubrique pour le déverrouillage des ouvrants, une autre pour l'allumage des feux de signalisations, ....

Dans un autre mode de réalisation, la deuxième rubrique R2 comporte au moins une sous-rubrique destinée à recevoir des messages de commandes concernant une pluralité de fonctions. Dans ce mode de réalisation, la commande pour le déverrouillage des ouvrants et celle pour l'allumage des feux de signalisations sont par exemple publiées dans la même sous rubrique.

Un message envoyé depuis le terminal 102 vers le courtier 103 comprend au moins les données suivantes : un identifiant du véhicule, un jeton d'autorisation et une commande.

L'identifiant est par exemple un numéro de série du véhicule ou VIN (pour Vehicle Identification Number) ou tout autre moyen d'identifier un véhicule de façon unique.

Le jeton d'autorisation (ou token) est utilisé pour communiquer des authentifications et des autorisations (aussi appelées « identity credentials » en anglais). Le jeton d'autorisation comporte au moins les données suivantes :
- une première donnée (access_token) contenant les droits de l'utilisateur ;
- une deuxième donnée (expires_in) correspondant à une date de fin de validité du jeton ;
- une troisième donnée token_signature correspondant à une signature (il s'agit d'un condensat (ou « hash ») du jeton, généré grâce à un algorithme de hachage (par exemple SHA-1) et éventuellement chiffré avec une clé privée d'une autorité d'authentification (par exemple un algorithme de chiffrement asymétrique RSA). La signature assure l'authenticité de l'émetteur et l'intégrité (non-altération) du message.

De façon avantageuse, le jeton est aussi chiffré. Si le jeton est chiffré avec un avec un algorithme de chiffrement asymétrique (par exemple de type RSA) alors il est chiffré avec une clé publique et déchiffré avec une clé privée connu seulement par l'actionneur 104.

L'actionneur 104 est un dispositif chargé de vérifier la validité des messages. L'actionneur 104 comporte des moyens de réception des messages publiés dans la première rubrique R1.

L'actionneur 104 comporte aussi des moyens de vérification des premiers messages. Ces moyens permettent de vérifier pour un premier message M1 par exemple :
- l'intégrité du message, en comparant la signature du message M1 avec un condensat calculé à partir du message reçue ;
- si la date de validité du jeton du premier message M1 n'est pas dépassée ;
- si la commande contenue dans le premier message M1 est conforme aux autorisations décrites dans le jeton.

L'invention concerne aussi un procédé de commande d'un véhicule 101 à distance à partir d'un terminal 102. Ce procédé est illustré sur la figure 1 par les différentes flèches numérotées. Le procédé comporte les étapes décrites ci-après.

Le procédé comporte d'abord une étape non représenté au cours de laquelle un utilisateur s'authentifie auprès d'un terminal 102 (par exemple en saisissant un nom d'utilisateur et un mot de passe). L'utilisateur authentifié a accès à différentes commandes applicables à un ou plusieurs véhicules. Le terminal 102 sur lequel l'utilisateur s'est authentifié reçoivent un jeton d'autorisation provenant d'une autorité de confiance.

La première étape 1 comporte la sélection d'une commande sur le terminal 102 par l'utilisateur. Dans l'exemple, la commande est une commande d'ouverture de porte du véhicule.

La deuxième étape 2 comporte l'envoi, à destination du courtier 103, d'un premier message M1 comportant la commande sélectionnée par l'utilisateur. Le premier message M1 est destiné à la première rubrique R1 hébergée par le courtier 103. Comme expliqué précédemment, le premier message M1 comprend aussi un jeton d'autorisation et un identifiant associé au véhicule 101.

La troisième étape 3 comprend la réception du premier message M1 par l'actionneur 104, l'actionneur 104 étant abonné à la première rubrique R1. A la réception du premier message M1, l'actionneur 104 vérifie la validité dudit premier message M1. En particulier, l'actionneur 104 vérifie la validité du jeton contenu dans le message à partir, notamment, de la date de validité du jeton et de sa signature. L'actionneur 104 vérifie aussi si la commande contenu dans le message est bien autorisée par les autorisations décrites dans le jeton.

L'actionneur 104 détermine aussi, à partir de l'identifiant de véhicule du message, dans quelle rubrique le deuxième message doit être publié.

On suppose dans l'exemple que le premier message M1 est valide et que le deuxième message M2 doit être publié dans la rubrique R2.

L'actionneur 104 publie le deuxième message M2 (étape 4) dans la deuxième rubrique R2.

Le véhicule 101 reçoit (étape 5) le message car il est abonné à la deuxième rubrique.

Le véhicule 101 reçoit le deuxième message M2 par l'intermédiaire du calculateur télématique 21. Le véhicule 101 est configuré pour exécuter la commande à la réception du deuxième message M2. De façon avantageuse, le véhicule 101 peut vérifier des conditions d'exécution pour accepter ou non d'exécuter la commande.

Dans l'exemple, le véhicule 101 vérifie qu'il est bien à l'arrêt avant d'effectuer la commande d'ouverture d'une porte.

Préférentiellement, le véhicule 101 émet (étape 6), en réponse au deuxième message M2, un troisième message M3 indiquant si la commande a, ou non, été exécutée. Le troisième message M3 est publié dans la troisième rubrique R3.

L'actionneur 104 reçoit (étape 7) le troisième message M3 émis par le véhicule 101.

Dans le cas où le terminal 102 est aussi abonné à la troisième rubrique R3, celui-ci reçoit le message de confirmation du véhicule 101. Ainsi l'utilisateur qui a initié la commande, est informé de l'exécution (ou de la non-exécution) de sa commande.

Dans le cas où le dispositif de stockage 105 est aussi abonné à la troisième rubrique R3, celui reçoit aussi le message du véhicule 101. Ceci permet de stocker les messages émis par le véhicule 101. Les troisièmes messages M3 ainsi stockés permettent de déterminer l'état du véhicule 101 à un instant donné ou bien d'établir un historique des états du véhicule 101.

## Revendications

1. Système (100) de commande d'un véhicule (101) à distance à partir d'un terminal (102), comportant un courtier (103) de message comprenant :
- une première rubrique (R1) pour recevoir au moins un premier message publié par le terminal (102), ledit premier message (M1) comportant une commande,
- une deuxième rubrique (R2) pour recevoir au moins un deuxième message (M2) destiné au véhicule (101),
ledit système (100) étant **caractérisé en ce qu'**il comporte en outre un actionneur (104) apte à recevoir le premier message (M1) et apte à effectuer une vérification sur le premier message (M1) et, si la vérification du premier message (M1) est positive, à publier le deuxième message (M2), dans la deuxième rubrique (R2) de façon à transmettre la commande au véhicule, le deuxième message (M2) comportant ladite commande.

2. Système (100) de commande d'un véhicule (101) selon la revendication 1, **caractérisé en ce que** le premier message (M1) comporte un jeton d'autorisation comprenant des autorisations, et **en ce que** l'actionneur (104) comporte des moyens de vérification apte à vérifier que la commande contenue dans le premier message (M1) est conforme aux autorisations du jeton.

3. Système (100) de commande d'un véhicule (101) selon l'une des revendications précédentes, **caractérisé en ce que** les jetons sont chiffrés et signés et **en ce que** l'actionneur (104) comporte des moyens de déchiffrement et vérification de la signature d'un jeton.

4. Système (100) de commande d'un véhicule (101) selon l'une des revendications précédentes, **caractérisé en ce que** seul le terminal (102) est autorisé à publier des messages dans la première rubrique (R1).

5. Système (100) de commande d'un véhicule (101) selon l'une des revendications précédentes, **caractérisé en ce que** seul le véhicule (101) est autorisé à recevoir les messages publiés dans la deuxième rubrique (R2).

6. Système (100) de commande d'un véhicule (101) selon l'une des revendications précédentes, **caractérisé en ce que** le courtier (103) de messages comporte, en outre, une troisième rubrique (R3) pour recevoir au moins un troisième message (M3) publié par le véhicule (101) et **en ce que** l'actionneur (104) reçoit le troisième message (M3) publié dans la troisième rubrique (R3).

7. Système (100) de commande d'un véhicule (101) selon la revendication précédente, **caractérisé en ce que** le courtier (103) de message est configuré pour que le terminal (102) reçoive aussi le troisième message (M3).

8. Système (100) de commande d'un véhicule (101) selon l'une des revendications 4 ou 5, **caractérisé en ce qu'**il comporte en outre un dispositif de stockage (105) et **en ce que** le courtier (103) de message est configuré pour que le dispositif de stockage (105) reçoive le troisième message (M3).

9. Système de commande d'un véhicule à distance selon l'une des revendications précédentes, **caractérisé en ce que** l'actionneur (104) est en outre configuré pour :
- Déterminer une série de conditions à partir du premier message (M1),
- Vérifier la série de conditions déterminées,
- Publier le deuxième message (M2) dans la deuxième rubrique (R2) uniquement si les conditions sont vérifiées.

## Patentansprüche

1. System (100) zum Fernsteuern eines Fahrzeugs (101) ausgehend von einem Endgerät (102), das einen Message-Broker (103) umfasst, der Folgendes umfasst:
- eine erste Rubrik (R1) zum Empfangen mindestens einer ersten Meldung, die von dem Endgerät (102) veröffentlicht wird, wobei die erste Meldung (M1) einen Befehl umfasst,
- eine zweite Rubrik (R2) zum Empfangen mindestens einer zweiten Meldung (M2), die für das Fahrzeug (101) bestimmt ist,
System (100) **dadurch gekennzeichnet, dass** es außerdem einen Aktuator (104) umfasst, der geeignet ist, um die erste Meldung (M1) zu empfangen, und geeignet ist, um eine Prüfung auf der ersten Meldung (M1) auszuführen und, falls die Prüfung der ersten Meldung (M1) positiv ist, die zweite Meldung (M2) in der zweiten Rubrik (R2) derart zu veröffentlichen, dass der Befehl zu dem Fahrzeug übertragen wird, wobei die zweite Meldung (M2) den Befehl umfasst.

2. System (100) zum Steuern eines Fahrzeugs (101) nach Anspruch 1, **dadurch gekennzeichnet, dass** die erste Meldung (M1) ein Autorisierungstoken umfasst, das Autorisierungen umfasst, und dass der Aktuator (104) Prüfmittel umfasst, die geeignet sind zu prüfen, dass der Befehl, der in der ersten Meldung (M1) enthalten ist, den Autorisierungen des Token entspricht.

3. System (100) zum Steuern eines Fahrzeugs (101) nach einem der vorstehenden Ansprüche, **dadurch gekennzeichnet, dass** die Token verschlüsselt und signiert sind, und dass der Aktuator (104) Mittel zum Entschlüsseln und Prüfen der Signatur eines Token umfasst.

4. System (100) zum Steuern eines Fahrzeugs (101) nach einem der vorstehenden Ansprüche, **dadurch gekennzeichnet, dass** nur das Endgerät (102) autorisiert ist, Meldungen in der ersten Rubrik (R1) zu veröffentlichen.

5. System (100) zum Steuern eines Fahrzeugs (101) nach einem der vorstehenden Ansprüche, **dadurch gekennzeichnet, dass** nur das Fahrzeug (101) autorisiert ist, die Meldungen zu empfangen, die in der zweiten Rubrik (R2) veröffentlicht sind.

6. System (100) zum Steuern eines Fahrzeugs (101) nach einem der vorstehenden Ansprüche, **dadurch gekennzeichnet, dass** der Message-Broker (103) außerdem eine dritte Rubrik (R3) umfasst, um mindestens eine dritte Meldung (M3) zu empfangen, die von dem Fahrzeug (101) veröffentlicht wird, und dass der Aktuator (104) die dritte Meldung (M3), die in der dritten Rubrik (R3) veröffentlicht wird, empfängt.

7. System (100) zum Steuern eines Fahrzeugs (101) nach dem vorstehenden Anspruch, **dadurch gekennzeichnet, dass** der Message-Broker (103) konfiguriert ist, damit das Endgerät (102) auch die dritte Meldung (M3) empfängt.

8. System (100) zum Steuern eines Fahrzeugs (101) nach einem der Ansprüche 4 oder 5, **dadurch gekennzeichnet, dass** es außerdem eine Speichervorrichtung (105) umfasst, und dass der Message-Broker (103) konfiguriert ist, damit die Speichervorrichtung (105) die dritte Meldung (M3) empfängt.

9. Fernsteuersystem eines Fahrzeugs nach einem der vorstehenden Ansprüche, **dadurch gekennzeichnet, dass** der Aktuator (104) außerdem konfiguriert ist, um:
- eine Reihe von Bedingungen ausgehend von der ersten Meldung (M1) festzulegen,
- die Reihe festgelegter Bedingungen zu prüfen,
- die zweite Meldung (M2) in der zweiten Rubrik (R2) nur zu veröffentlichen, falls die Bedingungen erfüllt sind.

## Claims

1. A remote control system (100) of a vehicle (101) based on a terminal (102), comprising a message broker (103) including:
- a first rubric (R1) for receiving at least one first message published by the terminal (102), said first message (M1) comprising a command,
- a second rubric (R2) for receiving at least one second message (M2) intended for the vehicle (101),
said system (100) being **characterized in that** it further comprises an actuator (104) able to receive the first message (M1) and able to perform a verification on the first message (M1) and, if the verification of the first message (M1) is positive, to publish the second message (M2), in the second rubric (R2) so as to transmit the command to the vehicle, the second message (M2) comprising said command.

2. The control system (100) of a vehicle (101) according to Claim 1, **characterized in that** the first message (M1) comprises an authorization token including authorizations, and **in that** the actuator (104) comprises verification means able to verify that the command contained in the first message (M1) is in accordance with the authorizations of the token.

3. The control system (100) of a vehicle (101) according to one of the preceding claims, **characterized in that** the tokens are encrypted and signed and **in that** the actuator (104) comprises means for decryption and verification of the signature of a token.

4. The control system (100) of a vehicle (101) according to one of the preceding claims, **characterized in that** only the terminal (102) is authorized to publish messages in the first rubric (R1).

5. The control system (100) of a vehicle (101) according to one of the preceding claims, **characterized in that** only the vehicle (101) is authorized to receive the messages published in the second rubric (R2).

6. The control system (100) of a vehicle (101) according to one of the preceding claims, **characterized in that** the message broker (103) comprises, furthermore, a third rubric (R3) for receiving at least one third message (M3) published by the vehicle (101) and **in that** the actuator (104) receives the third message (M3) published in the third rubric (R3).

7. The control system (100) of a vehicle (101) according to the preceding claim, **characterized in that** the message broker (103) is configured so that the terminal (102) also receives the third message (M3).

8. The control system (100) of a vehicle (101) according to one of Claims 4 or 5, **characterized in that** it further comprises a storage device (105) and **in that** the message broker (103) is configured so that the storage device (105) receives the third message (M3).

9. The remote control system of a vehicle according to one of the preceding claims, **characterized in that** the actuator (104) is furthermore configured for:
- determining a series of conditions from the first message (M1),
- verifying the series of determined conditions,
- publishing the second message (M2) in the second rubric (R2) solely if the conditions are verified.
